# DEMANDE DE BREVET EUROPEEN

(11) **EP 1 318 319 A1**
(43) Date de publication de la demande: **11.06.2003**
(21) Numéro de dépôt: 02293025.9
(22) Date de dépôt: 06.12.2002
(51) Int. Cl.: F16D 25/0632, F16D 27/11

(54) **Disposif d'embrayage de véhicule automobile**

(30) Priorité: 07.12.2001 FR 0115826; 07.12.2001 FR 0115827
(71) Demandeur: Renault s.a.s., 92100 Boulogne Billancourt (FR)
(72) Inventeur: Raoul, Michel, 78990 Elancourt (FR)

(57) **Abrégé**

Dispositif d'embrayage (400) de véhicule automobile comportant au moins un premier élément de couplage (401) solidaire d'un arbre d'embrayage (260) lui-même lié au moteur d'entraînement du véhicule par l'intermédiaire d'un volant moteur (100) et un second élément de couplage (404) lié à l'arbre d'entrée (510) de la boîte de vitesses, caractérisé en ce que les moyens de couplage sont coniques et sont séparés du volant moteur (100).

## Description

La présente invention se rapporte à un dispositif d'embrayage pour véhicule automobile.

Plus précisément, elle concerne un dispositif d'embrayage de véhicule automobile comportant au moins un premier élément de couplage solidaire d'un arbre d'embrayage lui-même lié au moteur d'entraînement du véhicule par l'intermédiaire d'un volant moteur et un second élément de couplage lié à l'arbre d'entrée de la boîte de vitesses.

Cette invention trouve une application privilégiée sur une transmission automatisée, où les manoeuvres de l'embrayage et des organes de sélection et de passage des vitesses sont prises en charge par des actionneurs placés sous le contrôle d'un calculateur.

Les embrayages équipant les véhicules automobiles à boîte de vitesses mécanique sont généralement constitués d'un disque ayant sur sa périphérie, et sur chaque face, une couronne en matériau de friction, d'un moyeu cannelé d'entraînement de l'arbre d'entrée de la boîte de vitesses, d'un dispositif d'amortissement des vibrations de torsion constitué de ressorts et de rondelles de frottement, et enfin d'un mécanisme comprenant un plateau de pression, un couvercle en tôle et un diaphragme élastique assurant le serrage de la friction entre le volant moteur et le plateau.

Lorsque la commande de la boîte est automatisée, la disposition classique d'embrayage indiquée ci-dessus nécessite un dispositif d'actionnement spécifique, indépendant des actionneurs de changement de rapport. Ce dispositif possède nécessairement ses propres moyens de contrôle, tels qu'un capteur de déplacement de la butée d'embrayage. Or, au ours de la vie de l'embrayage, l'effort d'actionnement évolue, et certains points de fonctionnement, se déplacent lorsque l'embrayage est usé. En particulier, il est nécessaire de prévoir un apprentissage permanent du point de réembrayage, ou d'équiper le mécanisme d'embrayage d'un dispositif de compensation d'usure.

En raison des risques d'échauffement et de dégradation anticipée en résultant, de telles mesures sont difficilement compatibles avec certaines prestations, offertes par les boîtes automatiques à convertisseur de couple et train épicycloïdal, telles le « rampage » et « l'anti-recul », très appréciées des utilisateurs dans certaines situations de conduite.

La présente invention a pour but de simplifier la commande d'une transmission automatisée en utilisant pour les manoeuvres d'embrayage et de débrayage, un actionneur de changement de rapport, qui est disponible lors des démarrages et arrêts du véhicule.

Pour des raisons évidentes, cet actionneur est en principe autre que celui de première, de deuxième et de marche arrière.

L'invention vise ainsi à permettre la mise en oeuvre de prestations de « rampage » et « d'anti-recul » analogues à celles des transmissions automatiques conventionnelles, et à assurer la stabilité dans le temps du comportement de l'embrayage.

Dans ce but, elle prévoit ce que les moyens de couplage de l'embrayage soient coniques et séparés du volant moteur.

Dans le même but elle propose aussi d'intégrer l'embrayage dans un compartiment étanche à bain d'huile aménagé dans la cloche d'embrayage et en communication avec le compartiment des mécanisme, ce compartiment permettant par le brassage de l'huile un meilleur refroidissement des surfaces de friction et de meilleures capacités thermiques et de résistance à l'usure.

Selon une autre caractéristique de l'invention, les moyens de couplage sont séparés du volant moteur par l'arbre d'embrayage et par des moyens de filtrage.

Afin d'obtenir des efforts et des courses de manoeuvres d'embrayage similaires à celle d'un engagement de rapport, l'invention propose également d'adopter un embrayage de grand diamètre, du type triple cône.

A cet effet, les moyens de couplage de l'embrayage comprennent notamment un cône d'entrée solidaire de l'arbre d'embrayage, un anneau supérieur lié à l'arbre d'entrée de la boîte de vitesse, et au moins un anneau intermédiaire conique.

L'actionneur concerné par la commande de l'embrayage et d'un rapport particulier de marche avant, peut être électromécanique, et muni d'un doigt d'actionnement à deux positions pouvant coopérer avec le crabot de l'axe de fourchette de commande d'embrayage ou le crabot de l'axe de fourchette de commande des rapports de troisième ou supérieur.

La présente invention vise à améliorer la capacité de filtrage des acyclismes du moteur sans recourir à un double volant amortisseur, ceci dans des conditions particulièrement favorables à l'automatisation des manoeuvres de l'embrayage et des changements de rapport, notamment sous couple.

Dans ce but elle propose que l'arbre d'embrayage soit relié au volant moteur par des moyens de filtrage fixés sur celui-ci.

De préférence, les moyens de couplage sont séparés du volant moteur par l'arbre d'embrayage et par les moyens de filtrage.

Selon un mode de réalisation particulier de l'invention, les moyens de filtrage comprennent, deux flasques solidaires du volant, un moyeu solidaire de l'arbre d'embrayage, et des ressorts courbes assurant une liaison souple entre ledit moyeu et lesdits flasques.

Ces dispositions permettent notamment de répartir les inerties entre le volant moteur et l'embrayage, et d'installer sur le volant (et non dans l'embrayage), un amortisseur d'une grande souplesse à très grand débattement permettant d'atteindre la performance d'un double volant amortisseur, pour le filtrage des vibrations.

D'autres caractéristiques et avantages de l'invention apparaîtront à la lecture de la description détaillée qui suit pour la compréhension de laquelle on se reportera aux dessins annexés dans lesquels :

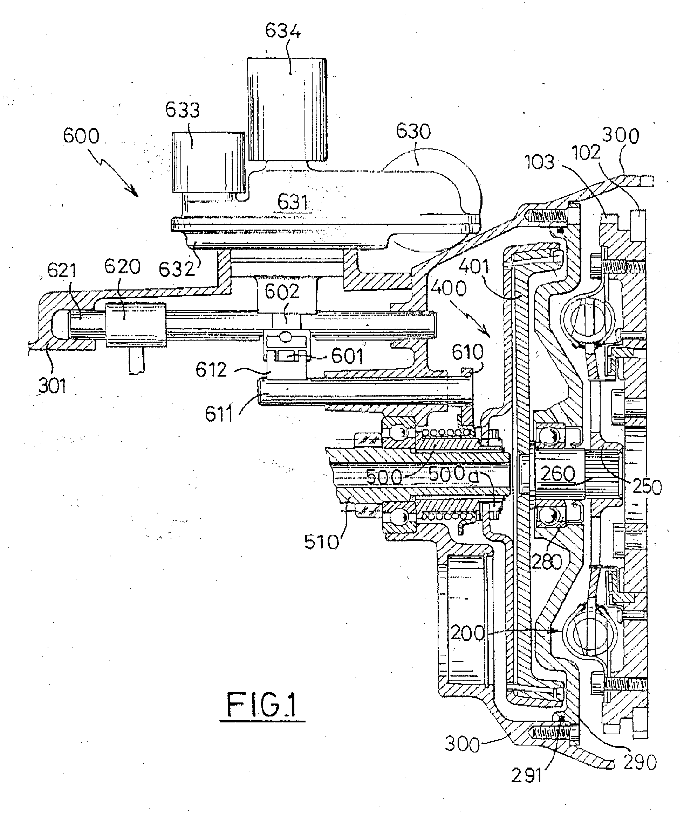

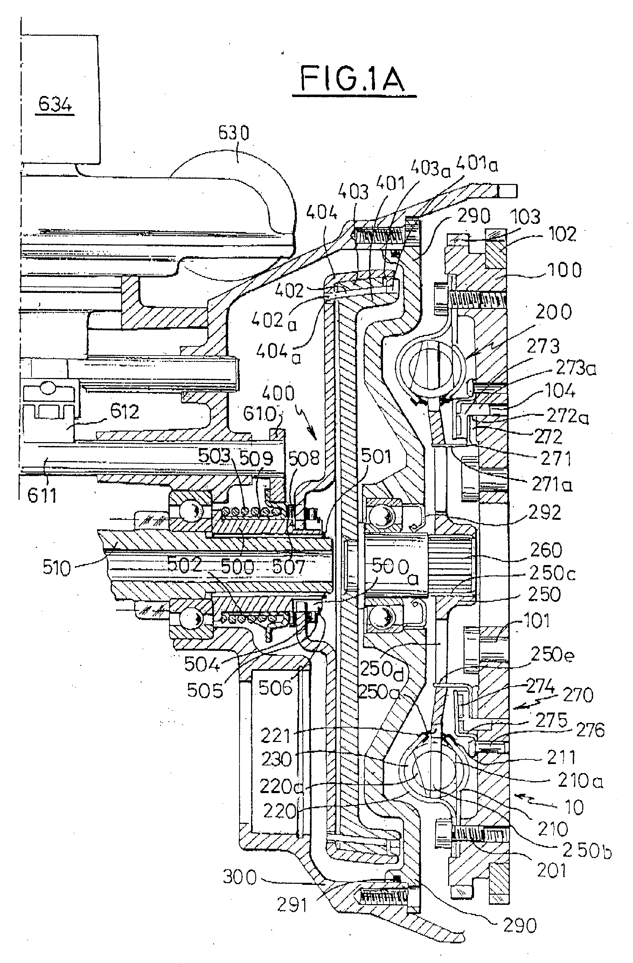

- la figure 1 est une vue longitudinale de l'ensemble du dispositif de couplage, de sa commande et de l'actionneur associé,

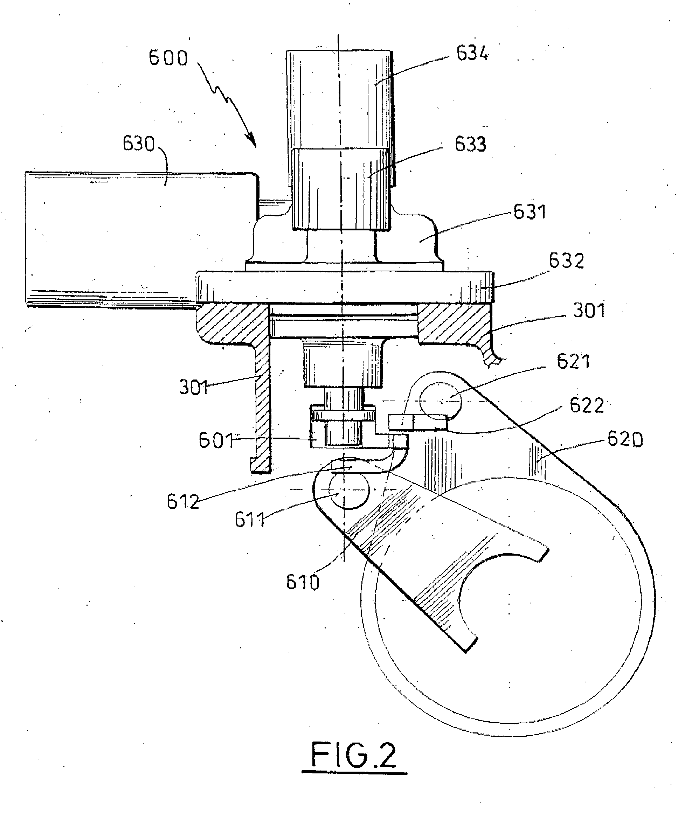

- la figure 2 est une vue transversale partielle du dispositif de commande,
- la figure 3 est une vue de face d'un des flasques de l'amortisseur de vibrations,
- la figure 4 est une vue de face d'un des flasques de l'amortisseur assemblé avec les ressorts au repos et le moyeu,
- la figure 5 est une vue de face d'un des flasques de l'amortisseur assemblé avec le moyeu et les ressorts en position comprimés, et
- la figure 6 une vue de face du moyeu seul.
On voit sur la figure 1 l'ensemble du dispositif d'embrayage 10 . Le volant moteur 100 est fixé rigidement et de manière connue sur le vilebrequin (non représenté) par les vis 101, et comporte une couronne de lancement 102 et une piste de captage de régime 103.

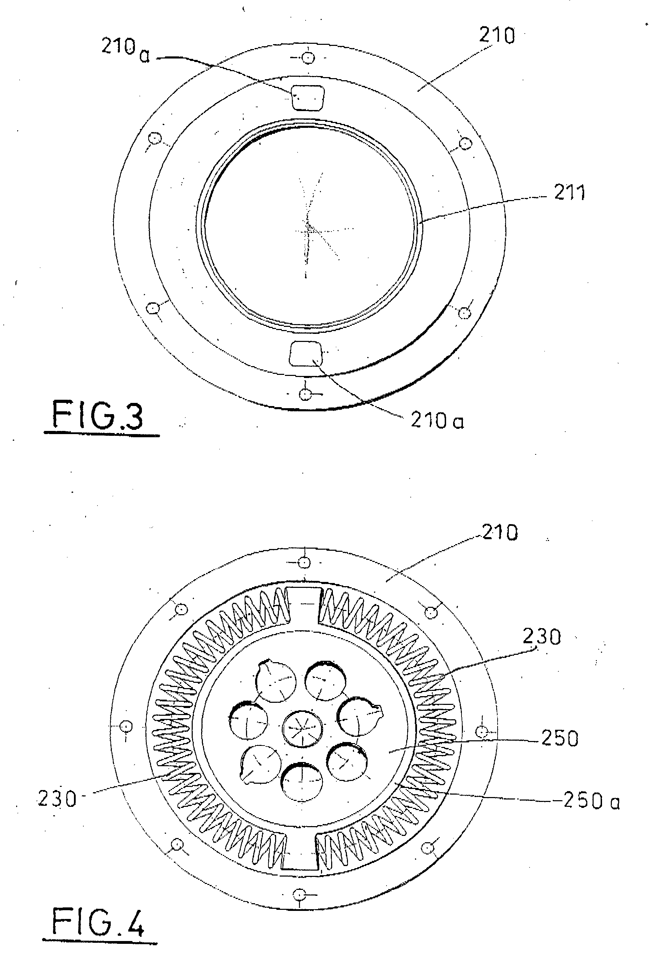

Le dispositif de filtrage 200 est fixé sur le volant par l'intermédiaire de vis 201. Il comprend une partie de filtrage proprement dite et une partie d'amortissement. La partie de filtrage est composée d'un compartiment étanche en forme de tore comprenant un premier flasque 210 dont l'ouverture centrale circulaire est munie d'un joint 211. Deux zones 210a disposées à 180° sont moins profondes et servent d'appui et de point de réaction des ressorts courbes 230 (voir figure3). Un second flasque 220 complète le compartiment torique. Son ouverture centrale circulaire est également munie d'un joint 221. De manière similaire au flasque 210, le flasque 220 possède également deux zones 220a disposées à 180° remplissant la même fonction que la zone 210a. Les zones 210a et 220a sont placées en vis à vis. Les deux joints circulaires 211 et 221 serrent une partie circulaire et plane 250a du moyeu 250, de façon à former un compartiment étanche qui peut avantageusement contenir un lubrifiant, tel que de la graisse.

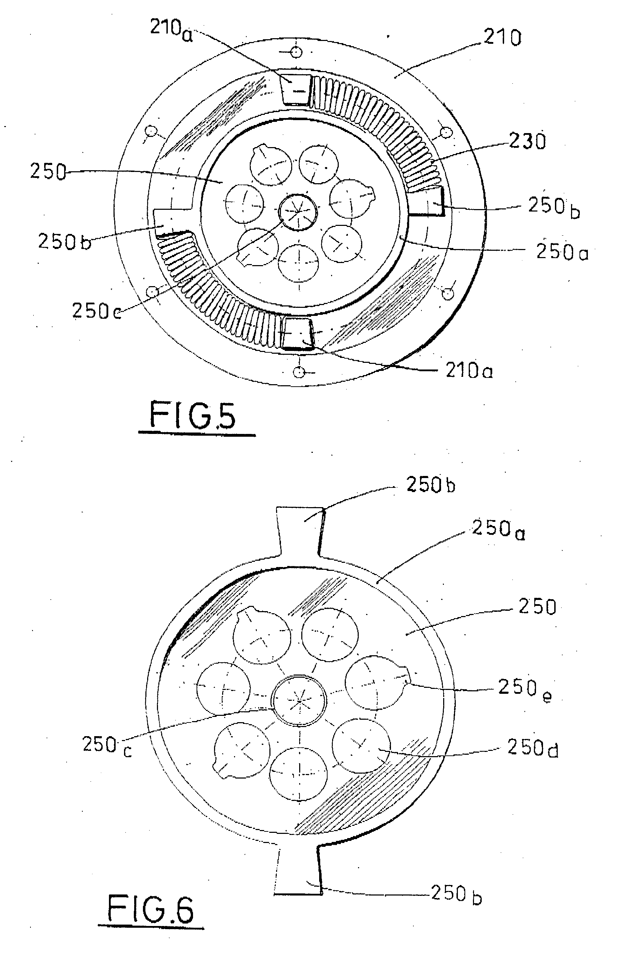

Le moyeu 250 possède deux pattes extérieures 250b qui entrent dans le compartiment formé par les deux flasques 210 et 220. Lorsque le système est au repos, les pattes 250b sont en vis à vis des zones 210a et 220a (voir figure 4). Lorsque le système est sous couple, les ressorts courbes 230 sont. sous tension entre les zones 210a et 220a des flasques 210 et 220 d'une part et les pattes 250b du moyeu 250 d'autre part (voir figure 5). Cette disposition à deux ressorts courbes 230, permet d'atteindre un angle de rotation relatif du moyeu 250 par rapport aux flasques 210 et 230 très élevé, une grande souplesse et par conséquent une grande performance en filtrage des vibrations de torsion. La partie centrale du moyeu comporte des cannelures 250c d'entraînement de l'arbre d'embrayage 260. Dans la zone radiale intermédiaire, sont réalisée des ouvertures 250d, en nombre égal à celui des vis de fixation 101 du volant moteur 100. Ces ouvertures sont destinées à laisser le passage à l'outil de serrage des vis 101. Un certain nombre de ces ouvertures 250d ont un contour non régulier comportant une excroissance 205e. Ces excroissances sont destinées à recevoir les pattes d'entraînement 27 la d'un des éléments du dispositif d'amortissement 270.

Le dispositif d'amortissement 270 a pour rôle de calmer les oscillations du système de filtrage, en étant le siège de frottements secs et de déperdition d'énergie. Il est constitué d'une rondelle en tôle 271 avec dans sa partie intérieure des pattes 271a en nombre égal à celui des excroissances 250e du moyeu. La rondelle 271 est entraînée en rotation par le moyeu, et suit ses mouvements. Cette rondelle 271 est prise en sandwich entre deux éléments de friction 272 et 273. Le premier élément de friction est en contact avec une face du volant et possède des évidements 272a coopérant un nombre égal de pattes 273a de l'élément de friction 273 assurant leur liaison en rotation. Les pattes 273a pénètrent à l'intérieur de logements 104 prévus dans le volant. Les éléments de friction sont donc liés en rotation au volant, alors que la rondelle en tôle 271 est liée au moyeu 250. Le dispositif d'amortissement est maintenu sous pression par la rondelle élastique 274, élément de réglage du système, comprimée par le capot 275 fixé sur le volant par des vis ou des rivets 276.

L'arbre d'embrayage 260 est guidé par un roulement 280, lui-même supporté par la plaque 290 de fermeture du compartiment embrayage. Cette plaque de fermeture est fixée et centrée dans le carter d'embrayage 300. L'étanchéité du compartiment est assuré en partie extérieure, par rapport au carter d'embrayage, par le joint torique 291, et par rapport à l'arbre d'embrayage par le joint à lèvre 292. Enfin le cône d'entrée 401 de l'embrayage 400 est fixé sur l'arbre d'embrayage.

L'embrayage 400 est constitué du cône d'entrée 401, de l'anneau inférieur 402, de l'anneau intermédiaire 403 et enfin de l'anneau supérieur 404. Il s'agit donc d'un embrayage triple cône car il y a trois faces de frottement coniques. Le cône 401 possède en périphérie des pattes 401a coopérant avec des évidements 403a, en nombre égal de l'anneau intermédiaire 403. De même, l'anneau inférieur 402 possède des pattes 402a coopérant avec les évidements 404a, en nombre égal, du cône supérieur 404.

L'anneau supérieur transmet la totalité du couple au moyeu 500 porté par l'arbre primaire 510 de la boîte de vitesses. Pour cela, le moyeu possède des évidements 500a qui coopèrent avec les dents 404b de l'ouverture centrale de l'anneau supérieur 404. Les flancs des dents 404b peuvent être parallèles entre eux et à l'axe de rotation de l'anneau ou légèrement inclinés pour neutraliser l'effet des frottements au contact avec le moyeu et augmenter l'efficacité du système. Le moyeu est lié en rotation à l'arbre primaire par les cannelures, et est maintenu axialement par le jonc d'arrêt 501.

A l'état repos, l'embrayage est normalement fermé, maintenu en pression par la coupelle 502 sur laquelle agit le ressort 503. A l'ouverture de l'embrayage, le cône supérieur 404 est éloigné du cône intermédiaire 403 par un système élastique de séparation, monté sur le moyeu, composé d'une rondelle élastique 504, de deux rondelles plates 505 et d'un jonc d'arrêt 506. A la fermeture de l'embrayage, la progressivité de la montée en charge est assurée par un autre dispositif élastique composé d'une rondelle élastique 507, d'une coupelle 508 et d'une rondelle plate 509.

La séparation de l'embrayage et du volant moteur, répartit leurs inerties respectives de part et d'autre du dispositif de filtrage, par ailleurs très souple, et permet d'obtenir un filtrage très performant des acyclismes du moteur thermique, qui est comparable à celui procuré par un double volant amortisseur.

L'intégration de l'embrayage dans un compartiment fermé à bain d'huile permet d'augmenter la capacité d'échange thermique, de sorte que les prestations de « rampage » et d'« anti-recul », peuvent être assurées dans de bonnes conditions.

La manoeuvre de débrayage consiste à libérer les anneaux de la pression exercée par le ressort 503. La coupelle 502 est éloignée de l'anneau 404 par l'action d'une fourchette 610 commandée par le dispositif d'actionnement 600. Cette fourchette est porté par un axe 611 guidé dans le carter d'embrayage 300 et sur lequel est fixé le crabot 612. L'axe 611 traverse le carter d'embrayage 300, et met en relation une fourchette 610 située dans le compartiment embrayage avec un crabot 612 situé dans le compartiment mécanisme. Le crabot 612 coopère avec un doigt de commande 601 porté par l'axe de commande 602. Cet axe de commande a deux mouvements, un premier mouvement de rotation qui déplace l'axe de fourchette d'embrayage, un deuxième mouvement de translation qui permet de sélectionner un deuxième crabot 622 de commande de la fourchette 620 portée par un axe 621 de commande de changement de rapport, par exemple les rapports de troisième et de cinquième. L'axe 621 est guidé par les carters d'embrayage 300 et de mécanisme 301.

Le dispositif de commande 600 est de type lectromécanique. Il possède une unité motrice 630, un réducteur mécanique (non représenté) intégré dans des carters propres 631 et 632, des moyens de contrôle de positionnement 633, et un actionneur 634 de type électro-aimant avec ses moyens propres de contrôle de position du doigt 601.

Ce dispositif de commande des changements de rapports intégré dans une boîte automatisée, peut donc être utilisé pour commander l'ouverture et la fermeture de l'embrayage, permettant ainsi de faire l'économie de l'actionneur et des moyens de contrôle associés, habituellement dédiés à la manoeuvre de l'embrayage.

## Revendications

1. Dispositif d'embrayage (400) de véhicule automobile comportant au moins un premier élément de couplage conique (401) solidaire d'un arbre d'embrayage (260) lui-même lié au moteur d'entraînement du véhicule par l'intermédiaire d'un volant moteur (100) et un second élément de couplage conique (404) lié à l'arbre d'entrée (510) de la boîte de vitesses, **caractérisé en ce que** les moyens de couplage sont contenus dans un compartiment étanche par un flasque (290) centré dans le carter d'embrayage (300) et assurant la séparation dudit embrayage et du volant moteur.

2. Dispositif d'embrayage selon la revendication 1, **caractérisé en ce que** les moyens de couplage (401, 404) sont séparés du volant moteur (100) par l'arbre d'embrayage (260) et par des moyens de filtrage (200).

3. Dispositif d'embrayage selon la revendication 1 ou 2, **caractérisé en ce que** les moyens de couplage comprennent un cône d'entrée (401) solidaire de l'arbre d'embrayage (260), un anneau supérieur (404) lié à l'arbre d'entrée (510) de la boîte de vitesse, et au moins un anneau intermédiaire conique (402, 403).

4. Dispositif d'embrayage selon la revendication 1,2 ou 3 **caractérisé en ce que** le flasque (290) porte un roulement de guidage (280) de l'arbre d'embrayage (260) et du cône d'entrée (401).

5. Dispositif d'embrayage selon la revendication 3 ou 4, **caractérisé en ce que**, lors de l'ouverture de l'embrayage, l'anneau supérieur (404) est monté sur un moyeu (500) porté par l'arbre primaire (510), et repoussé à l'écart des autres éléments de couplage (403, 402, 401) par des rondelles (504, 505) centrées sur ce moyeu (500).

6. Dispositif d'embrayage selon la revendications 4 ou 5 **caractérisé en ce qu'**il est maintenu en position de fermeture par un ressort (503) prenant appui sur l'anneau supérieur (404), par l'intermédiaire d'une coupelle de commande (502).

7. Dispositif d'embrayage selon l'une des revendications 2 à 6 **caractérisé en ce que** les moyens de filtrage (200) fixés sur l'arbre d'embrayage (260).

8. Dispositif d'embrayage selon l'une des revendications 2 à 7 **caractérisé en ce que** les moyens de filtrage (200) comprenent deux flasques (210) et (220) solidaires du volant (260), un moyeu (250) solidaire de l'arbre d'embrayage (260), et des ressorts courbes (230) assurant une liaison souple entre ledit moyeu et lesdits flasques.

9. Dispositif d'embrayage selon la revendication 8 **caractérisé en ce que** les flasques (210, 220) forment un compartiment torique renformant des ressorts courbes (230).

10. Dispositif d'embrayage selon la revendication 8 ou 9 **caractérisé en ce que** les flasques (210, 220) prennent appui sur le moyeu (250) de façon à former avec celui-ci un compartiment étanche.

11. Dispositif d'embrayage selon la revendication 8 ou 9 ou 10 **caractérisé en ce que** les ressorts (230) prennent appui sur des pattes extérieures (250b) du moyeu (250), et sur des zones de réaction (210a, 220a) des flasques (210,220).

12. Dispositif d'embrayage selon l'une des revendications 8 à 11 **caractérisé en ce que** les oscillations des moyens de filtrage (200) sont amorties par une rondelle (271) entraînée en rotation par le moyeu (250), et retenue par des éléments de friction (272, 273) solidaires du volant (100).

13. Dispositif d'embrayage selon la revendications 12 **caractérisé en ce que** la rondelle (271) et les éléments de friction (272, 273) sont maintenus sous pression par une rondelle élastique (274).

14. Dispositif d'embrayage selon la revendications 13 **caractérisé en ce que** la rondelle élastique est comprimée par un capot (275) fixé sur le volant (100).
